# EUROPÄISCHE PATENTSCHRIFT

(11) **EP 4 253 815 B1**
(45) Veröffentlichungstag und Bekanntmachung des Hinweises auf die Patenterteilung: **29.01.2025**
(21) Anmeldenummer: 23191676.8
(22) Anmeldetag: 18.07.2022
(51) Int. Cl.: F16K 7/12, F16K 31/04, F16K 31/53

(54) **SPANNBAUGRUPPE FÜR EIN PROZESSVENTIL**
TENSIONING ASSEMBLY FOR A PROCESS VALVE
ENSEMBLE DE SERRAGE POUR UNE SOUPAPE DE PROCESSUS

(30) Priorität: 04.08.2021 DE 102021120287; 23.12.2021 DE 202021107033 U
(43) Veröffentlichungstag der Anmeldung: 04.10.2023
(62) Teilanmeldung aus: 22185399.7
(73) Patentinhaber: GEMÜ Gebr. Müller Apparatebau GmbH & Co. Kommanditgesellschaft, 74653 Ingelfingen (DE)
(72) Erfinder: Barghoorn, Maximilian, 74523 Schwäbisch Hall (DE); Magej, Johann, 74523 Schwäbisch Hall (DE)
(74) Vertreter: DREISS Patentanwälte PartG mbB

(56) Entgegenhaltungen:
- EP-A1- 0 399 625
- DE-A1- 102014 013 512
- US-A- 2 863 631
- US-A- 5 112 027

## Beschreibung

Die Erfindung betrifft Fortschritte im Bereich der Prozessventile.

US 5 112 027 A offenbart eine Spannbaugruppe gemäß dem Oberbegriff des Anspruchs 1.

Die Probleme des Standes der Technik werden durch eine Spannbaugruppe für ein Prozessventil gemäß dem Anspruch 1 und durch ein Verfahren zum Betreiben eines Prozessventil gemäß dem Anspruch 14 gelöst.

Ein erster Aspekt der Beschreibung betrifft eine Spannbaugruppe umfassend ein Gehäuse mit einer Schnittstelle zur starren Verbindung mit einem Ventilkörper, ein sich am Gehäuse abstützendes Getriebe und ein am Abtrieb des Getriebes angeordnetes Spannelement, wobei das Spannelement eine Anpressfläche umfasst, die zum Verklemmen eines lateralen Außenbunds einer Membran des Prozessventils zwischen dem Spannelement und dem Ventilkörper ausgebildet ist. Eine schaltbare Kupplung leitet ein in die Kupplung eingebrachtes Moment wahlweise in eine Antriebsstange oder in das Getriebe ein.

Die vorgeschlagene Lösung bildet eine Basis für eine werkzeugfreie, (teil-)automatisierte und damit verbesserte Verspannung der Membran zur Herstellung der Dichtheit nach außen.

Durch die im Innern der Spannbaugruppe erfolgende Verspannung der Membran wird es ermöglicht, dass die Gestaltung der Oberflächen der Spannbaugruppe und auch des Prozessventils vom Verspannvorgang entkoppelt werden. Durch diese gewonnene Designfreiheit können die Oberflächen so gestaltet werden, dass die Abreinigbarkeit des Prozessventils verbessert wird.

Weitergehend werden durch die vorgeschlagene Lösung bisherige Arbeiten zur Verspannung der Membran ersetzt und verbessert, wodurch Serviceabläufe des Prozessventils nicht nur vereinfacht werden, sondern auch schneller vonstattengehen können.

Zusätzlich ergeben sich durch die vorgeschlagene Lösung Freiheitsgrade bei der Ausgestaltung der Schnittstelle zum Ventilkörper, da die Verspannung der Membran nicht zeitgleich mit der Anordnung der Spannbaugruppe am Ventilkörper erfolgen muss.

Durch die vorgeschlagene Lösung wird weitergehend auch eine gleichmäßige Verspannung der Membran im Verlauf des Außenbundes ermöglicht, wodurch die Lebensdauer der Membran gesteigert werden kann.

Im Vergleich zu rein federvorgespannten Systemen werden definierte Einstellungen von Verspannungszuständen auch kundenabhängig bzw. anforderungsspezifisch möglich. Eine Anpassung der Verspannung der Membran an unterschiedliche Betriebsdrücke kann so realisiert werden.

Ein vorteilhaftes Beispiel zeichnet sich dadurch aus, dass die Spannbaugruppe eine im Wesentlichen rotatorische Bewegung des Antriebs mittels des Getriebes in eine entlang einer Stellachse orientierte translatorische Bewegung des Spannelements umwandelt.

Mithilfe des Getriebes wird eine bessere Dosierung der aufgebrachten Spannung auf den Außenbund der Membran ermöglicht, wodurch eine für das Material und der Anwendung der Membran zu hohe Spannung vermieden und die Lebensdauer der Membran erhöht wird.

Ein vorteilhaftes Beispiel zeichnet sich dadurch aus, dass das Getriebe selbsthemmend ausgebildet ist.

Dies bewirkt, dass eine eingestellte Spannung auf den Außenbund der Membran ohne eine dauerhafte Ansteuerung des Antriebs gehalten wird.

Aufgrund des selbsthemmenden Effekts des Getriebes verbleibt die Membran ohne angesteuerten Antrieb verklemmt, wodurch ein Betrieb des Prozessventils sicher gewährleistet wird.

Ein vorteilhaftes Beispiel zeichnet sich dadurch aus, dass die Spannbaugruppe eine Durchgangsöffnung umfasst, die entlang der Stellachse durch die Spannbaugruppe verläuft.

Mithilfe des Durchgangs durch die Spannbaugruppe wird es ermöglicht, diese zwischen einem Ventilantrieb und dem Ventilkörper anzuordnen, wobei die Ventilstange durch den Durchgang verläuft.

Ein vorteilhaftes Beispiel zeichnet sich dadurch aus, dass die Spannbaugruppe eine Sensoreinheit umfasst, die dazu ausgebildet ist, wenigstens ein Signal bereitzustellen, das eine auf den Außenbund der Membran wirkende Spannung charakterisiert.

Durch die Sensoreinheit ist es möglich ein Signal bereitzustellen, das die an der Membran wirkende Spannung charakterisiert. Dadurch kann eine Stellung oder Regelung der Spannung mit dieser Spannbaugruppe realisiert werden. Dadurch wird ein automatisches Verspannen und Entspannen des Außenbunds der Membran sowie ein dauerhaftes Abdichten nach außen ermöglicht. Zudem werden ein Membranwechsel und eine Membranmontage durch das automatische Verspannen und Entspannen des Außenbunds der Membran vereinfacht sowie beschleunigt. Insbesondere vorteilhaft verbessert bzw. ermöglicht die Verwendung des Signals eine werkzeuglose und teil- oder vollautomatisierte Verspannung der Membran. Dadurch können Prozessventile in kurzen Zeitabständen gereinigt, getauscht oder gewartet werden, ohne den Bedarf an zusätzlichem Werkzeug. Dies ist besonders im Bereich der Pharma- und Lebensmittelindustrie von Vorteil.

Ein vorteilhaftes Beispiel zeichnet sich dadurch aus, dass die Sensoreinheit einen Sensor umfasst, wobei der Sensor zum Gehäuse feststehend angeordnet ist, und wobei der Sensor ein Signal bereitstellt, das eine Position des Spannelements und damit die auf den Außenbund der Membran wirkende Spannung charakterisiert.

So lässt sich beispielsweise eine kontaktlose Messung realisieren. Des Weiteren ist diese Wegmessung kostengünstig und konstruktiv einfach realisierbar.

Ein vorteilhaftes Beispiel zeichnet sich dadurch aus, dass die Spannbaugruppe eine Auswerteeinheit umfasst, die dazu ausgebildet ist, den Antrieb in Abhängigkeit von dem wenigstens einen Signal zu betreiben.

Die Auswerteeinheit ermöglicht so eine automatisierte Ver- und Entspannung des Außenbundes der Membran.

Ein vorteilhaftes Beispiel zeichnet sich dadurch aus, dass die Auswerteeinheit dazu ausgebildet ist, in Abhängigkeit von dem wenigstens einen Signal und in Abhängigkeit von einem weiteren Signal, insbesondere einem Verspannsignal beziehungsweise einem Entspannsignal, den Antrieb für ein Verspannen beziehungsweise Entspannen des Außenbundes der Membran anzusteuern.

Ein zweiter Aspekt der Beschreibung betrifft ein Verfahren zum Betreiben eines Prozessventils umfassend eine schaltbare Kupplung, welche antriebsseitig mit einem Ventilantrieb verbunden ist und welche abtriebsseitig mit einer Antriebsstange und einer Verspannbaugruppe verbunden ist, das Verfahren umfassend: Betreiben des Ventilantriebs in einem Betriebszustand, in welchem die schaltbare Kupplung den Ventilantrieb kraftführend mit der Antriebsstange verbindet, in Abhängigkeit von einem zugeführten Stellsignal, welches eine gewünschte Stellung der Antriebsstange repräsentiert; und
Betreiben des Ventilantriebs in einem Montagezustand, in welchem die schaltbare Kupplung den Ventilantrieb kraftführend mit der der Verspannbaugruppe verbindet, in Abhängigkeit von einem Sensorsignal, welches eines Verspannung eines Außenbundes einer Membran repräsentiert, und in Abhängigkeit von einem Verspannsignal oder einem Entspannsignal.

In der Zeichnung zeigen:
- Figur 1: in schematischer Form ein Prozessventil mit einem Antrieb, einem Ventilkörper, einer Membran und einer nicht erfindungsgemäßen Spannbaugruppe;
- Figur 2: die Spannbaugruppe mit einem Spannelement und Membran;
- Figur 3: ein weiteres Beispiel der Spannbaugruppe mit einem Schneckentrieb;
- Figur 4: in schematischer Form das Prozessventil mit einer zwischen dem Antrieb, der erfindungsgemäßen Spannbaugruppe und Antriebsstange angeordneten schaltbaren Kupplung; und
- Figur 5: ein Zustandsübergangsdiagramm zum Betreiben des Prozessventils gemäß Figur 4.

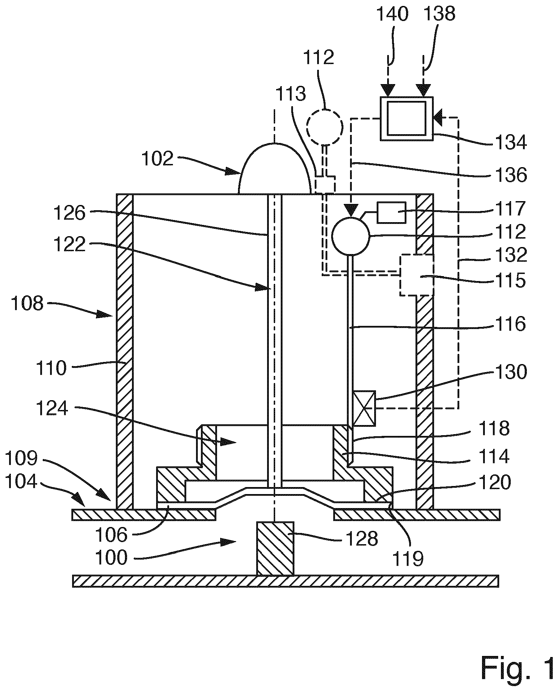

Die Figur 1 zeigt in einem schematischen Schnitt ein Prozessventil 100 mit einem Ventilantrieb 102, einem Ventilkörper 104, einer Membran 106 (englisch diaphragm) und einer Spannbaugruppe 108. Das dargestellte Prozessventil 100 ist ein Membranventil. Die Funktion der in dieser Beschreibung erläuterten technischen Maßnahmen ist jedoch ohne weiteres auf andere Ventiltypen wie beispielsweise Sitzventile übertragbar, bei denen ein Absperrkörper und eine Membran zum Erreichen der Dichtheit nach außen auseinanderfallen.

Die nicht erfindungsgemäße Spannbaugruppe 108 umfasst ein Gehäuse 110, welches durch eine Schnittstelle 109 starr an dem Ventilkörper 104 des Prozessventils 100 angeordnet ist. Die Schnittstelle kann über ineinandergreifende Gewinde, einen Bajonettverschluss oder andere lösbare Befestigungsarten realisiert werden. Zudem sind innerhalb des Gehäuses 110 der Spannbaugruppe 108 ein zum Gehäuse 110 feststehender Antrieb 112 und ein Spannelement 114 sowie ein Getriebe 116 angeordnet. Der Antrieb 112 ist beispielsweise als Elektromotor, pneumatischer Antrieb oder als mit oder ohne ein Werkzeug bedienbarer Handantrieb ausgebildet. Das schematisch gezeigte Getriebe 116 ist antriebsseitig mit dem Antrieb 112 verbunden und umfasst abtriebsseitig ein Gewinde 118, beispielsweise in Form eines Trapezgewindes. Das Getriebe 116 kann als ein Wellgetriebe, ein Zykloidengetriebe, ein Planetengetriebe oder ein Stirnradgetriebe ausgeführt sein.

Durch das Getriebe 116 wird das Spannelement 114 mit dem Antrieb 112 gekoppelt. Das Spannelement 114 übt durch eine der Membran 106 zugewandten kreisringförmige Anpressfläche 119 eine einstellbare Spannung auf einen lateralen Außenbund 120, der einen inneren Funktionsbereich der Membran 106 umgibt, aus. Durch das Getriebe 116 wird eine rotatorische Bewegung des Antriebs 112 in eine entlang einer Stellachse 122 translatorische Bewegung des Spannelements 114 umgewandelt, wodurch die Spannung auf den lateralen Außenbund 120 der Membran 106 erhöht oder vermindert wird. Das Getriebe 116 ist mit dem Spannelement 114 selbsthemmend ausgelegt, um die eingestellte Spannung auf den Außenbund 120 der Membran 106 zu halten, ohne dass der Antrieb 112 angesteuert wird.

Zudem umfasst die Spannbaugruppe 108 eine Durchgangsöffnung 124, die entlang der Stellachse 122 durch die Spannbaugruppe 108 und das Spannelement 114 verläuft. Die Durchgangsöffnung 124 ermöglicht ein Anbringen der Spannbaugruppe 108 zwischen dem Prozessventil 100 und dem Ventilantrieb 102, wobei eine Antriebsstange 126 zum Antreiben der Membran 106 des Prozessventils 100 durch die Durchgangsöffnung 124 verläuft. Die Antriebsstange 126 ist ventilantriebsseitig mit dem Ventilantrieb 102 gekoppelt und ventilseitig mit der Membran 106 verbunden. Dadurch ist ein Öffnen und Schließen eines Fluidkanals zwischen einem Ventilsitz 128 und der Membran 106 mittels des Ventilantriebs 102 möglich.

Darüber hinaus umfasst die Spannbaugruppe 108 eine Sensoreinheit 130. Die Sensoreinheit 130 umfasst einen Sensor, der ein Signal 132 erzeugt, das die auf den Außenbund 120 der Membran 106 wirkende Spannung charakterisiert und einer Auswerteeinheit 134 zugeführt wird. In Abhängigkeit von dem Signal 132 ermittelt die Auswerteeinheit 134 ein Ansteuersignal 136 zum Betreiben des Antriebs 112.

Zum Verspannen des Außenbunds 120 der Membran 106 wird der Auswerteeinheit 134 ein Verspannsignal 138 und gegebenenfalls ein Sollwert beziehungsweise Schwellwert zugeführt. Der Antrieb 112 wird dementsprechend zum Verspannen des Außenbunds 120 der Membran 106 von der Auswerteeinheit 134 angesteuert, bis das Signal 132 den Sollwert beziehungsweise Schwellwert erreicht, der eine Soll-Spannkraft charakterisiert.

Zum Entspannen des Außenbunds 120 der Membran 106 wird der Auswerteeinheit 134 ein Entspannsignal 140 und gegebenenfalls ein Sollwert beziehungsweise Schwellwert zugeführt. Der Antrieb 112 wird dementsprechend zum Entspannen des Außenbunds 120 der Membran 106 von der Auswerteeinheit 134 angesteuert, bis das Signal 132 den Sollwert beziehungsweise Schwellwert erreicht, der keine oder eine verringerte Spannkraft charakterisiert.

In einem Beispiel umfasst die Spannbaugruppe 108 keine Sensoreinheit 130. In diesem Fall sind durch zum Gehäuse 110 feststehend angeordnete Anschläge definierte Endpositionen des Spannelements 114 vorgesehen. Trifft das Spannelement 114 auf einen dieser Endanschläge, so wird der Antrieb 112 bei Überschreiten eines Motorstroms abgeschaltet.

In einem auf dem vorigen Beispiel aufbauenden Beispiel ist die Sensoreinheit 130 vorhanden. Das Signal 136 zur Ansteuerung des Antriebs 112 wird in Abhängigkeit von der Überstromüberwachung und in Abhängigkeit von dem Signal 136 ermittelt, um die Betriebssicherheit zu erhöhen.

Ist der Antrieb 112 ein Elektromotor, so umfasst die Spannbaugruppe 108 in einem Beispiel eine Notstromversorgung 117 in Form einer Batterie oder eines Akkumulators, um im Wartungsfall ohne Stromversorgung von außen den Antrieb 112 betreiben zu können.

In einem Beispiel ist der Antrieb 112 nicht innerhalb, sondern außerhalb der Spannbaugruppe 108 angeordnet (gestrichelt dargestellt). Hierzu umfasst die Spannbaugruppe 108 eine Getriebeschnittstelle 113 für das Getriebe 116. Die Schnittstelle 113 kann wie dargestellt in einem Bereich der Spannbaugruppe 108 angeordnet sind, die in Richtung des Antriebs 102 zeigt.

Zusätzlich oder alternativ ist eine Getriebeschnittstelle 115 lateral und von außen zugänglich an dem Gehäuse 110 angeordnet. Über die Getriebeschnittstelle 115 kann ein vom Antrieb 112 unterschiedlicher manueller, elektrischer oder pneumatischer Antrieb beispielsweise zu Wartungszwecken angeschlossen werden.

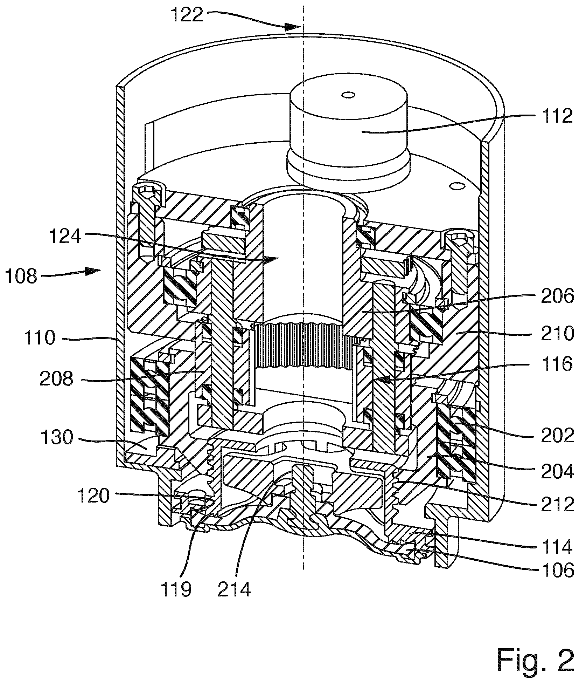

Die Figur 2 zeigt eine Spannbaugruppe 108 als eine Ausführungsform der in Figur 1 schematisch dargestellten Spannbaugruppe 108. Die Spannbaugruppe 108 übt über das Spannelement 114 eine einstellbare Spannung auf den lateralen Außenbund 120, der den inneren Funktionsbereich der Membran 106 umgibt, aus. Die Spannbaugruppe 108 umfasst das Gehäuse 110, den Antrieb 112, der vorliegend als Elektromotor ausgebildet ist, das Getriebe 116 sowie das Spannelement 114.

Der Antrieb 112 ist feststehend zum Gehäuse 110 und innerhalb des Gehäuses 110 angeordnet. Der Antrieb 112 ist an das Getriebe 116 gekoppelt. Das Getriebe 116 umfasst ventilseitig eine Lagerung 202 und ein durch die Lagerung 202 um die Stellachse 122 in beide Drehrichtungen rotatorisch beweglich gelagertes Hohlrad 204. Das Getriebe 116 ist als eine Form eines Planetengetriebes ausgebildet und umfasst einen rotatorisch um die Stellachse beweglich gelagerten Planetenträger 206 sowie Planetenräder 208 und ein zum Gehäuse 110 feststehendes Hohlrad 210. Der Antrieb 112 treibt den Planetenträger 206 sowie die drauf angeordneten Planetenräder 208 rotatorisch um die Stellachse 122 an. Die Planetenräder 208 rollen dabei auf dem feststehen Hohlrad 210 ab und versetzen dadurch das Hohlrad 204 in eine Rotation.

Beispielsweise könnte die Anzahl an Zähnen der im Getriebe 116 verbauten Zahnräder folgendermaßen realisiert werden: Der Antrieb 112 umfasst 10 Zähne; der Planetenträger 206 umfasst 95 Zähne; die Planetenräder 208 umfassen 28 Zähne, das feststehende Hohlrad 210 umfasst 106 Zähne; und das Hohlrad 204 umfasst 104 Zähne. Durch eine Änderung der Drehrichtung des Antriebs 112 ändert sich dementsprechend die Rotationsrichtung des Hohlrads 204, wodurch die Spannung auf den Außenbund 120 der Membran 106 vermindert beziehungsweise erhöht wird, da sich das Spannelement 114 dementsprechend translatorisch bewegt.

Das Spannelement 114 drückt mit seiner Anpressfläche 119 auf den Außenbund 120 der Membran 106. Das Spannelement 114 ist durch einen Formschluss des Spannelements 114 mit dem Gehäuse 110 nicht drehbar um die Stellachse 122 zum Gehäuse 110 gelagert und durch ein entlang der Stellachse 122 ausgerichtetes Außengewinde 212, insbesondere ein 30x2mm Trapezgewinde, in welches ein entsprechendes Innengewinde des Hohlrads 204 eingreift, mit dem Hohlrad 204 gekoppelt.

Der Formschluss zwischen dem Spannelement 114 und dem Gehäuse 110 wird beispielsweise durch eine parallel zur Stellachse verlaufende erhabene Kontur am Gehäuse 110 und eine dementsprechend ausgestaltete Nut am Spannelement 114 realisiert, um die Rotation des Spannelements 114 um die Stellachse 122 zu blockieren und eine Translation in beide Richtungen der Stellachse 122 zu erlauben. Die Rotationsbewegung des Hohlrads 204 wird durch die ineinandergreifenden Gewinde in eine translatorische Bewegung des Spannelements 114 entlang der Stellachse 122 umgewandelt. Mittels dieser translatorischen Bewegung des Spannelements 114 wird die Spannung auf den Außenbund 120 der Membran 106 eingestellt. Das Gewinde 212 ist selbsthemmend ausgelegt, wodurch die eingestellte Spannung auf den Außenbund 120 der Membran 106 ohne den Bedarf einer weiteren Ansteuerung der Spannbaugruppe 108 gehalten wird.

Die Spannbaugruppe 108 umfasst die Durchgangsöffnung 124, die entlang der Stellachse 122 durch die Spannbaugruppe 108 und das Spannelement 114 verläuft. Die Durchgangsöffnung 124 ermöglicht ein Anbringen der Spannbaugruppe 108 zwischen dem Ventilantrieb 102 und dem Prozessventil 100, wobei die Antriebsstange 126 zum Antreiben der Membran 106 des Prozessventils 100 ausgehend von dem Ventilantrieb 102 durch die Durchgangsöffnung 124 verläuft und an einer Aufnahmeeinrichtung 214 an der Membran 106 befestigt ist.

Zudem umfasst die Spannbaugruppe 108 die Sensoreinheit 130, welche beispielsweise eine Sensorplatine umfasst, starr mit dem Gehäuse 110 verbunden und für eine direkte oder indirekte Wegmessung des Spannelements 114 ausgebildet ist. Die Sensoreinheit 130 umfasst beispielsweise einen Hall-Sensor oder ein Potentiometer. Weitere Sensoren mit unterschiedlichen Messprinzipien können auf der Sensorplatine vorhanden sein.

Die Sensoreinheit 130 ermöglicht durch die Wegmessung eine präzisere Einstellung der durch das Spannelement 114 auf den Außenbund 120 der Membran 106 aufgebrachten Spannung. Das Signal 132 aus Figur 1 charakterisiert die vorgenannte Spannung. Des Weiteren kann die Spannbaugruppe 108 mithilfe der Sensoreinheit 130 auf den aktuellen Verklemmzustand der Membran 106 angepasst angesteuert werden.

Beispielsweise ist die Auswerteeinheit 134 dazu ausgebildet, durch eine Ansteuerung des Antriebs 112 und einer daraufhin folgenden Bewegung des Spannelements 114 die Spannung auf den Außenbund 120 der Membran 106 zu erhöhen, um einer Leckage entgegenzuwirken.

Selbstverständlich sind auch weitere Sensorkonzepte wie beispielsweise das Anbringen von Dehnungsmessstreifen zur Kraftmessung insbesondere an dem Spannelement 114 oder an dem Gewinde 118 denkbar, um das Signal 132 aus Figur 1 bereitzustellen, das die Spannung auf den Außenbund 120 der Membran 106 charakterisiert. Darüber hinaus ist es denkbar, alternativ oder zusätzlich Piezoelemente als Sensoren an dem Gewinde 118 beziehungsweise an der des lateralen Außenbunds 120 zugewandten Oberfläche des Spannelements 114 oder auf dem lateralen Außenbund 120 der Membran 106 anzubringen, um das Signal 132 aus Figur 1 bereitzustellen, das die Spannung auf den Außenbund 120 der Membran 106 charakterisiert. Dadurch kann das Signal 132 aus Figur 1 der Auswerteeinheit 134 aus Figur 1 zugeführt werden.

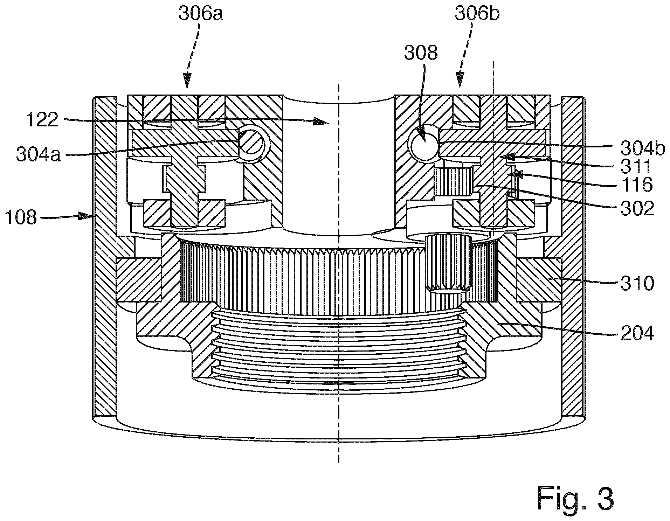

Figur 3 zeigt die Spannbaugruppe 108 aus Figur 2 mit einer alternativen Ausführungsform des Getriebes 116. Diese Ausführungsform umfasst das Getriebe 116 in Form eines Zahnradgetriebes, welches ein Zahnradpaar oder mehrere Zahnradpaare 302 und mindestens einen Schneckentrieb 304a, 304b umfasst. In der Zeichnung nicht sichtbare Elektromotoren 306a, 306b, die den Antrieb 112 bilden, leiten ihr Moment über den jeweiligen Schneckentrieb 304a, 304b in das Getriebe 116 ein. Der Schneckentrieb 304a wird rotatorisch um eine lotrecht zur Stellachse 122 verlaufende Achse 308 von dem Elektromotor 306a angetrieben. Dadurch wird diese Rotation auf das erste Zahnradpaar 302 um eine parallel zur Stellachse 122 orientierte Achse 311 übertragen.

Zudem ist das Hohlrad 204 des Zahnradgetriebes durch ein Dünnringlager 310 gelagert, wodurch der translatorische Freiheitsgrad entlang der Stellachse 122 blockiert wird und eine Rotation des Hohlrads 204 in beide Drehrichtungen um die Stellachse 122 zugelassen wird.

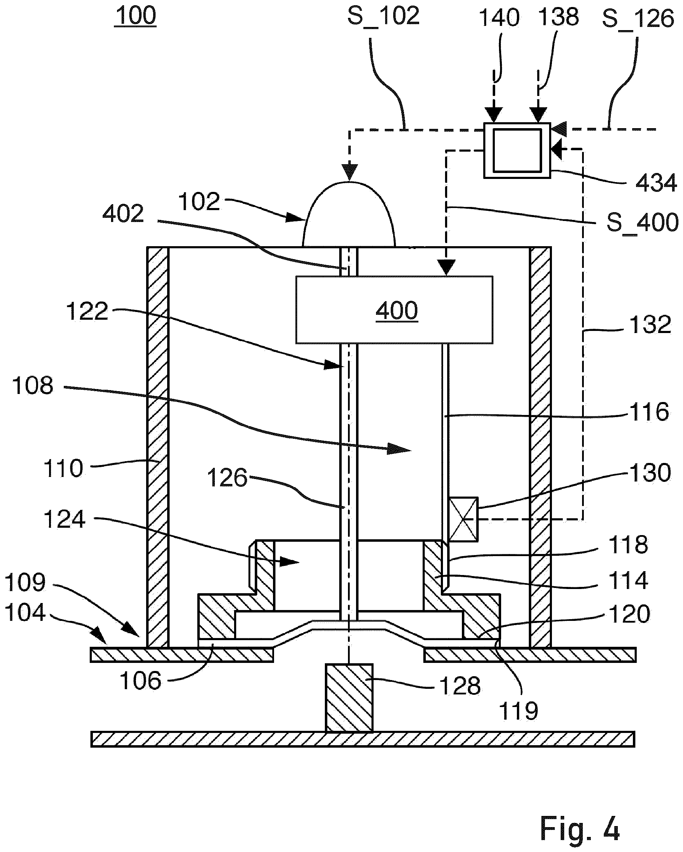

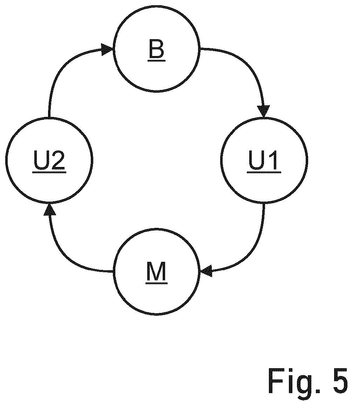

Figur 4 zeigt eine erfindungsgemäße Ausführung des Prozessventils 100 in einer schematischen Form. Im Unterschied zur Figur 1 befindet sich zwischen dem Antrieb 102, welcher beispielsweise ein Elektromotor ist, der Spannbaugruppe 108 und der Antriebsstange 126 eine schaltbare Kupplung 400. Der in den vorigen Figuren gezeigte Antrieb 112 entfällt in diesem Beispiel, womit sich eine Kosten- und Bauraumeinsparung ergibt. Figur 5 zeigt ein Zustands-Übergangs-Diagramm, auf das im Folgenden ebenso Bezug genommen wird.

Die schaltbare Kupplung 400 leitet ein in die Kupplung 400 eingebrachtes Moment wahlweise in die Antriebsstange 126 oder in das Getriebe 116 ein. Eine antriebsseitige Welle 402 wird von dem Ventilantrieb 102 angetrieben und beispielsweise in eine Rotationsbewegung versetzt. Das Moment der Welle 402 wird in die Kupplung 400 eingeleitet. In einem Betriebszustand B werden ein Ansteuersignal S_102 für den Ventilantrieb 102 in Abhängigkeit von einem zugeführten Stellsignal S_126 betrieben. Das Stellsignal S_126 repräsentiert die gewünschte Stellung der Antriebsstange 126 und damit des beweglichen Abschnitts der Membran 106.

In einem Montagezustand M werden das Ansteuersignal S_102 in Abhängigkeit von dem Sensorsignal 132 und in Abhängigkeit von dem Verspannsignal 138 oder dem Entspannsignal 140 betrieben.

Ein Wechsel vom dem Montagezustand M in den Betriebszustand B wird beispielsweise dann verhindert, wenn das Sensorsignal 132 indiziert, dass der laterale Bereich der Membran 106 nicht ausreichend verspannt ist. Dies kann beispielsweise über einen Vergleich des Sensorsignals 132 mit einem Schwellwert durchgeführt werden.

Ein Wechsel von dem Betriebszustand B in den Montagezustand M wird beispielsweise dann verhindert, wenn das Stellsignal S_102 indiziert, dass sich die Antriebsstange 126 in einer Position befindet, in welche die Membran 106 auf den Ventilsitz 128 drückt.

Während des Betriebszustandes B und des Montagezustandes M wird die Ausgabe des Signals S_400 zum Umschalten zwischen den beiden Antriebsausgängen durch die Auswerteeinheit 434 blockiert. Vielmehr überführt die Auswerteeinheit 434 in einem ersten Übergangszustand U1 von dem Betriebszustand B in den Montagezustand M die Antriebsstange 126 in eine Montageposition, wobei hierbei die Welle 402 kraftführend bzw. drehmomentführend mit der Antriebsstange 126 verbunden ist und nicht kraftführend mit dem Getriebe 116 verbunden ist. Die Antriebsstange 126 wird ohne Einbringen eines Moments ausgehend von Kupplung 400 in der jeweiligen Position gehalten. Nach Erreichen der Montageposition der Antriebsstange 126 wird über das Signal S_400 die Kupplung 400 derart angesteuert, dass die Welle 402 anstatt mit der Antriebsstange 122 mit dem Getriebe 116 kraftführend verbunden ist. Erst dann wird in den Montagezustand M gewechselt, in dem das Steuersignal S_102 die Verspannung des lateralen Bereichs der Membran 106 bestimmt.

Der Übergang in den ersten Übergangszustand wird beispielsweise über ein separates nicht gezeigtes Signal an die Auswerteeinheit 434 gestartet. Beispielsweise kann zur Erzeugung dieses Signals ein manuell zu bedienendes Element an dem Prozessventil vorgesehen sein.

Die Auswerteeinheit 434 überführt das Prozessventil 100 mittels eines Übergangzustandes U2 von dem Montagezustand M in den Betriebszustand B. In dem zweiten Übergangszustand U2 überprüft die Auswerteeinheit 434 in Abhängigkeit von dem Sensorsignal 132, ob der laterale Bereich der Membran 106 ausreichend verspannt ist. Ist dies nicht der Fall, dann wird ein Wechsel in den Betriebszustand B verhindert. Ist dies hingegen der Fall, dann wird zunächst die Kupplung 400 mittels des Signals S_400 derart betrieben, dass die drehmomentführende Verbindung zwischen dem Antrieb 102 und der Verspannbaugruppe 108 getrennt wird und die kraftführende Verbindung zwischen dem Antrieb 102 und der Antriebsstange 126 hergestellt wird und anschließend der Wechsel in den Betriebszustand B durchgeführt wird.

## Patentansprüche

1. Eine Spannbaugruppe (108) für ein Prozessventil (100) umfassend:
- ein Gehäuse (110) mit einer Schnittstelle (109) zur starren Verbindung mit einem Ventilkörper (104),
- ein sich am Gehäuse (110) abstützendes Getriebe (116), und
- ein am Abtrieb des Getriebes (116) angeordnetes Spannelement (114), wobei das Spannelement (114) eine Anpressfläche (119) umfasst, die zum Verklemmen eines lateralen Außenbunds (120) einer Membran (106) des Prozessventils (100) zwischen dem Spannelement (114) und dem Ventilkörper (104) ausgebildet ist, **gekennzeichnet durch**
- eine schaltbare Kupplung (400), welche ein in die Kupplung (400) eingebrachtes Moment wahlweise in eine Antriebsstange (126) oder in das Getriebe (116) einleitet.

2. Die Spannbaugruppe (108) gemäß dem Anspruch 1, wobei das Getriebe (116) selbsthemmend ausgebildet ist.

3. Die Spannbaugruppe (108) nach einem der vorherigen Ansprüche, wobei die Spannbaugruppe (108) eine Durchgangsöffnung (124) umfasst, die entlang der Stellachse (122) durch die Spannbaugruppe (108) verläuft.

4. Die Spannbaugruppe (108) nach einem der vorherigen Ansprüche, wobei die Spannbaugruppe (108) eine Sensoreinheit (130) umfasst, die dazu ausgebildet ist, wenigstens ein Signal (132) bereitzustellen, das eine auf den Außenbund (122) der Membran (106) wirkende Spannung charakterisiert.

5. Die Spannbaugruppe (108) nach vorherigem Anspruch,
wobei die Sensoreinheit (130) einen Sensor umfasst,
wobei der Sensor zum Gehäuse (110) feststehend angeordnet ist, und wobei der Sensor das wenigstens eine Signal (132) bereitstellt, das eine Position des Spannelements (114) und damit die auf den Außenbund (122) der Membran (106) wirkende Spannung charakterisiert.

6. Die Spannbaugruppe (108) gemäß einem der vorigen Ansprüche, wobei die Spannbaugruppe (108) eine Getriebeschnittstelle (113, 115) umfasst, über welche ein Moment in das Getriebe (116) einleitbar ist.

7. Die Spannbaugruppe (108) gemäß dem Anspruch 5 umfassend eine Auswerteeinheit (434), die dazu ausgebildet ist, einen Ventilantrieb (102) in Abhängigkeit von dem wenigstens einen Signal (132) zu betreiben.

8. Die Spannbaugruppe (108) nach vorherigem Anspruch,
wobei die Auswerteeinheit (434) dazu ausgebildet ist, in Abhängigkeit von dem wenigstens einen Signal (132) und in Abhängigkeit von einem Verspannsignal (138) oder einem Entspannsignal (140) den Ventilantrieb (102) für ein Verspannen oder Entspannen des Außenbundes (120) der Membran (106) anzusteuern.

9. Ein Prozessventil (100) umfassend die Spannbaugruppe (108) gemäß einem der vorigen Ansprüche.

10. Das Prozessventil (100) gemäß dem Anspruch 9, wobei die Spannbaugruppe (108) zwischen einem Ventilantrieb (102) und dem Ventilkörper (104) angeordnet ist.

11. Das Prozessventil (100) gemäß dem vorigen Anspruch, wobei die von dem Ventilantrieb (102) angetriebene Antriebsstange (126) durch die Spannbaugruppe (108) geführt ist und mit der Membran (106) zu deren Bewegung verbunden ist.

12. Das Prozessventil (100) gemäß dem Anspruch 11, wobei die von dem Ventilantrieb (102) angetriebene Antriebsstange (126) durch die Spannbaugruppe (108) und durch die Membran geführt ist und mit einem Absperrmittel zu dessen Bewegung verbunden ist.

13. Das Prozessventil (100) gemäß einem der vorigen Ansprüche 9 bis 12 und einer Spannbaugruppe (108) gemäß einem der Ansprüche 1 bis 8, wobei die schaltbare Kupplung (400) antriebsseitig mit dem Ventilantrieb (102) verbunden ist, und wobei die schaltbare Kupplung (400), insbesondere in Abhängigkeit von einem zugeführten Ansteuersignal (S_400), abtriebsseitig das eingebrachte Moment wahlweise in die Antriebsstange (126) oder in das Getriebe (116) einleitet.

14. Ein Verfahren zum Betreiben eines Prozessventils (100) umfassend eine schaltbare Kupplung (400), welche antriebsseitig mit einem Ventilantrieb (102) verbunden ist und welche abtriebsseitig mit einer Antriebsstange (126) und einer Verspannbaugruppe (108) verbunden ist, das Verfahren umfassend:
Betreiben des Ventilantriebs (102) in einem Betriebszustand (B), in welchem die schaltbare Kupplung (400) den Ventilantrieb (102) kraftführend mit der Antriebsstange (126) verbindet, in Abhängigkeit von einem zugeführten Stellsignal (S_126), welches eine gewünschte Stellung der Antriebsstange (126) repräsentiert; und
Betreiben des Ventilantriebs (102) in einem Montagezustand (M), in welchem die schaltbare Kupplung (400) den Ventilantrieb (102) kraftführend mit der Verspannbaugruppe (108) verbindet, in Abhängigkeit von einem Sensorsignal (132), welches eine Verspannung eines Außenbundes einer Membran (106) repräsentiert, und in Abhängigkeit von einem Verspannsignal (138) oder einem Entspannsignal (140).

## Claims

1. A tensioning assembly (108) for a process valve (100), comprising:
- a housing (110) having an interface (109) for rigid connection to a valve body (104),
- a gearing (116) supported on the housing (110); and
- a tensioning element (114) arranged at the output of the gearing (116), the tensioning element (114) comprising a contact surface (119) which is designed to clamp a lateral outer collar (120) of a diaphragm (106) of the process valve (100) between the tensioning element (114) and the valve body (104),
**characterized by**
- a switchable coupling (400) which transmits a torque introduced into the coupling (400) either into a drive rod (126) or into the gearing (116).

2. The tensioning assembly (108) according to claim 1, wherein the gearing (116) is designed to be self-locking.

3. The tensioning assembly (108) according to any of the preceding claims, wherein the tensioning assembly (108) comprises a through-opening (124) which extends through the tensioning assembly (108) along the adjusting axis (122).

4. The tensioning assembly (108) according to any of the preceding claims, wherein the tensioning assembly (108) comprises a sensor unit (130) which is designed to provide at least one signal (132) which characterizes a tension acting on the outer collar (122) of the diaphragm (106).

5. The tensioning assembly (108) according to the preceding claim, wherein the sensor unit (130) comprises a sensor, wherein the sensor is arranged so as to be fixed with respect to the housing (110), and wherein the sensor provides the at least one signal (132) which characterizes a position of the tensioning element (114) and thus the tension acting on the outer collar (122) of the diaphragm (106).

6. The tensioning assembly (108) according to any of the preceding claims, wherein the tensioning assembly (108) comprises a gearing interface (113, 115) via which a torque can be transmitted into the gearing (116).

7. The tensioning assembly (108) according to claim 5, comprising an evaluation unit (434) which is designed to operate a valve drive (102) on the basis of the at least one signal (132).

8. The tensioning assembly (108) according to the preceding claim, wherein the evaluation unit (434) is designed to actuate the valve drive (102), on the basis of the at least one signal (132) and on the basis of a tightening signal (138) or a slackening signal (140), for tightening or slackening the outer collar (120) of the diaphragm (106).

9. A process valve (100) comprising the tensioning assembly (108) according to any of the preceding claims.

10. The process valve (100) according to claim 9, wherein the tensioning assembly (108) is arranged between a valve drive (102) and the valve body (104).

11. The process valve (100) according to the preceding claim, wherein the drive rod (126) driven by the valve drive (102) extends through the tensioning assembly (108) and is connected to the diaphragm (106) for the movement thereof.

12. The process valve (100) according to claim 11, wherein the drive rod (126) driven by the valve drive (102) extends through the tensioning assembly (108) and through the diaphragm and is connected to a shut-off means for the movement thereof.

13. The process valve (100) according to any of the preceding claims 9 to 12 and a tensioning assembly (108) according to any of claims 1 to 8, wherein the switchable coupling (400) is connected to the valve drive (102) on the drive side, and wherein the switchable coupling (400), on the output side, selectively transmits the introduced torque into the drive rod (126) or into the gearing (116), in particular on the basis of a supplied actuation signal (S_400).

14. A method for operating a process valve (100) comprising a switchable coupling (400) which is connected to a valve drive (102) on the drive side and which is connected to a drive rod (126) and a tensioning assembly (108) on the output side, the method comprising:
operating the valve drive (102) in an operating state (B) in which the switchable coupling (400) connects the valve drive (102) to the drive rod (126) in a force-transmitting manner, on the basis of a supplied adjusting signal (S_126) which represents a desired position of the drive rod (126); and
operating the valve drive (102) in an assembly state (M) in which the switchable coupling (400) connects the valve drive (102) to the tensioning assembly (108) in a force-transmitting manner, on the basis of a sensor signal (132) which represents a tightening of an outer collar of a diaphragm (106), and on the basis of a tightening signal (138) or a slackening signal (140).

## Revendications

1. Ensemble de serrage (108) pour une soupape de processus (100) comprenant :
- un boîtier (110) comportant une interface (109) permettant la liaison rigide avec un corps de soupape (104),
- une transmission (116) s'appuyant sur le boîtier (110), et
- un élément de serrage (114) disposé au niveau de la sortie de la transmission (116), dans lequel l'élément de serrage (114) comprend une surface de pression (119) qui est conçue pour coincer une collerette extérieure (120) latérale d'une membrane (106) de la soupape de processus (100) entre l'élément de serrage (114) et le corps de soupape (104),
**caractérisé par**
- un embrayage commutable (400) qui introduit un couple appliqué dans l'embrayage (400) au choix dans une tige d'entraînement (126) ou dans la transmission (116).

2. Ensemble de serrage (108) selon la revendication 1, dans lequel la transmission (116) est conçue de manière à être autobloquante.

3. Ensemble de serrage (108) selon l'une des revendications précédentes, dans lequel l'ensemble de serrage (108) comprend une ouverture de passage (124) qui s'étend le long de l'axe de réglage (122) à travers l'ensemble de serrage (108).

4. Ensemble de serrage (108) selon l'une des revendications précédentes, dans lequel l'ensemble de serrage (108) comprend une unité formant capteur (130) qui est configurée pour fournir au moins un signal (132) qui caractérise une contrainte agissant sur la collerette extérieure (122) de la membrane (106).

5. Ensemble de serrage (108) selon la revendication précédente, dans lequel l'unité formant capteur (130) comprend un capteur, dans lequel le capteur est disposé de manière fixe par rapport au boîtier (110), et dans lequel le capteur fournit l'au moins un signal (132) qui caractérise une position de l'élément de serrage (114) et donc la contrainte agissant sur la collerette extérieure (122) de la membrane (106).

6. Ensemble de serrage (108) selon l'une des revendications précédentes, dans lequel l'ensemble de serrage (108) comprend une interface de transmission (113, 115) par l'intermédiaire de laquelle un couple peut être introduit dans la transmission (116).

7. Ensemble de serrage (108) selon la revendication 5 comprenant une unité d'évaluation (434) qui est configurée pour faire fonctionner un entraînement de soupape (102) en fonction de l'au moins un signal (132).

8. Ensemble de serrage (108) selon la revendication précédente, dans lequel l'unité d'évaluation (434) est configurée pour commander l'entraînement de soupape (102) pour un serrage ou un desserrage de la collerette extérieure (120) de la membrane (106) en fonction de l'au moins un signal (132) et en fonction d'un signal de serrage (138) ou d'un signal de desserrage (140).

9. Soupape de processus (100) comprenant l'ensemble de serrage (108) selon l'une des revendications précédentes.

10. Soupape de processus (100) selon la revendication 9, dans laquelle l'ensemble de serrage (108) est disposé entre un entraînement de soupape (102) et le corps de soupape (104).

11. Soupape de processus (100) selon la revendication précédente, dans laquelle la tige d'entraînement (126) entraînée par l'entraînement de soupape (102) est guidée à travers l'ensemble de serrage (108) et est reliée à la membrane (106) pour son mouvement.

12. Soupape de processus (100) selon la revendication 11, dans laquelle la tige d'entraînement (126) entraînée par l'entraînement de soupape (102) est guidée à travers l'ensemble de serrage (108) et à travers la membrane et est reliée à un moyen d'arrêt pour son mouvement.

13. Soupape de processus (100) selon l'une des revendications précédentes 9 à 12 et ensemble de serrage (108) selon l'une des revendications 1 à 8, dans lesquels l'embrayage commutable (400) est relié côté entraînement à l'entraînement de soupape (102), et dans lesquels l'embrayage commutable (400) introduit côté sortie le couple appliqué au choix dans la tige d'entraînement (126) ou dans la transmission (116), en particulier en fonction d'un signal de commande (S_400) acheminé.

14. Procédé permettant de faire fonctionner une soupape de processus (100) comprenant un embrayage commutable (400) qui est relié côté entraînement à un entraînement de soupape (102) et qui est relié côté sortie à une tige d'entraînement (126) et à un ensemble de serrage (108), le procédé comprenant :
le fait de faire fonctionner l'entraînement de soupape (102) dans un état de fonctionnement (B) dans lequel l'embrayage commutable (400) relie par guidage de force l'entraînement de soupape (102) à la tige d'entraînement (126) en fonction d'un signal de réglage (S_126) acheminé qui représente une position souhaitée de la tige d'entraînement (126) ; et
le fait de faire fonctionner l'entraînement de soupape (102) dans un état de montage (M) dans lequel l'embrayage commutable (400) relie par guidage de force l'entraînement de soupape (102) à l'ensemble de serrage (108) en fonction d'un signal de capteur (132) qui représente un serrage d'une collerette extérieure d'une membrane (106), et en fonction d'un signal de serrage (138) ou d'un signal de desserrage (140).
